# EUROPEAN PATENT APPLICATION

(11) **EP 4 425 771 A1**
(43) Date of publication of application: **04.09.2024**
(21) Application number: 23159445.8
(22) Date of filing: 01.03.2023
(51) Int. Cl.: H02M 1/00, H02M 7/483, H02M 7/493

(54) **CONTROLLER**

(71) Applicant: Hamilton Sundstrand Corporation, Charlotte, NC 28217 (US)
(72) Inventor: HARCEAGA, Finn Andrei, Solihull (GB); POPEK, Grzegorz Ryszaed, Birmingham (GB); KULSANGCHAROEN, Ponggorn, Solihull (GB)
(74) Representative: Dehns

(57) **Abstract**

A controller for a DC-AC inverter circuit. The circuit comprises two terminals for receiving a DC-link voltage, two or more capacitors connected in series between the two terminals, wherein each capacitor has a capacitor voltage. The circuit is configured to convert an input electrical power to an output electrical power for operating a main electrical load. The controller is configured to, in response to the main electrical load becoming non-operational, configure the circuit into a balancing mode. In the balancing mode the controller configures the circuit to output electrical power to an electrical component, such that the DC-AC inverter circuit remains operational to balance the capacitor voltages while the main electrical load remains non-operational.

## Description

### FIELD OF THE INVENTION

This application relates to a controller for a multilevel DC-AC inverter circuit.

### BACKGROUND

A DC-AC inverter may require multiple voltage levels to efficiently convert direct current (DC) electrical power to alternating current (AC) electrical power. A circuit comprising the DC-AC inverter which is provided with a DC-link voltage may therefore internally produce additional voltage levels using capacitors. The voltage drop over each capacitor needs to be balanced relative to the DC-link voltage.

In some scenarios or operating environments, the capacitor voltages may become unbalanced due to various operational and/or environmental factors. This unbalancing condition may be harmful to the operation and reliability of the circuit.

### SUMMARY

In a first aspect there is provided a controller for a DC-AC inverter circuit. The circuit comprises two terminals for receiving a DC-link voltage, two or more capacitors connected in series between the two terminals, wherein each capacitor has a capacitor voltage. The circuit is configured to convert an input electrical power to an output electrical power for operating a main electrical load. The controller is configured to, in response to the main electrical load becoming non-operational, configure the circuit into a balancing mode. In the balancing mode the controller configures the circuit to output electrical power to an electrical component, such that the DC-AC inverter circuit remains operational to balance the capacitor voltages while the main electrical load remains non-operational.

An inverter which is ON actively balances the capacitor voltages as a result of control algorithms for the inverter. A DC-AC inverter circuit which powers a main load that frequently becomes non-operational is highly susceptible to unbalancing, because while the inverter is idle, leakage currents, voltage measurements, part to part variation etc. can cause the capacitor voltages to become unbalanced. Because the DC-AC inverter circuit is caused to output electrical power in response to the main electrical load becoming non-operational, the inverter(s) within the DC-AC inverter circuit remain ON even when the main load is non-operational. As a result, the capacitor voltages remain balanced, by the inverter, regardless of the operational state of the main electrical load, and susceptibility to unbalancing is advantageously reduced or eliminated completely. This is particularly advantageous for loads which are intermittent or infrequently used, for example a motor which drives a hatch to open or close an aircraft landing gear compartment.

Because the capacitor voltages remain balanced, the components within the DC-AC inverter circuit can be downsized compared to a conventional system (wherein components are usually overrated to protect against the unbalancing), resulting in lower manufacture costs, as well as smaller device footprints and an overall weight reduction. This is particularly advantageous in applications where size and weight is limited, for example in aerospace applications.

The present invention thus provides a way for the capacitor voltages to remain balanced in all operating conditions, by providing a means for an inverter to remain ON (and thus provide active balancing) and redirecting the power output from the inverter elsewhere, such as to not cause inadvertent operation of a main electrical load. It will be understood that by causing the inverters to stay ON and thereby providing the active balancing, energy will be consumed. However, the benefits gained by a smaller, more lightweight DC-AC inverter circuit (as a result of not requiring overrated components) outweigh the additional energy consumption requirements, particularly if the overall weight reduction leads to, for example, a more (power) efficient aircraft.

Furthermore, because the inverter channels are not required to be connected to one another, the possibility of a fault in one channel propagating to another channel is reduced, and therefore the reliability of the DC-AC inverter circuit is improved.

In some examples, the main electrical load comprises a Field Orientated Controller for a motor, and the controller is further configured to, in the balancing mode: configure the main electrical load to be the electrical component; and configure the circuit to provide the output electrical power such that when the Field Orientated Controller receives the output electrical power, a current builds up in the Field Orientated Controller. This configuration enables the inverter(s) to remain ON and provide the active balancing to the DC-level midpoint, without requiring additional internal or external components to the DC-AC inverter circuit. The power output from the inverter(s) is dumped into the main electrical load, in a manner which is safe and does not cause mechanical operation of the load. The energy transfer from the inverter(s) may be, for example, stored in a magnetic field generated in the windings of the motor.

In some examples the current which builds up in the Field Orientated Controller is defined by orthogonal components which are configured to have an orientation that prevents the motor from producing torque. The orthogonal components may be, for example flux and torque.

In some examples the circuit further comprises an output filter configured to filter the output electrical power for the main electrical load, the controller further configured to, in the balancing mode: configure the inverter to demand high frequency switching; and configure the filter to be the electrical component, such that the circuit provides the output electrical power to the filter. An output filter filtering high frequency switching is an effective way of demanding a current draw from the inverter(s) to cause them to stay ON, without causing undesired operation of the main electrical load.

In some examples, when the inverter is configured to demand high frequency switching the inverter and output filter are disconnected from the main electrical load.

In some examples the high frequency switching is at a frequency greater than 1kHz. In some example the output filter is a low-pass filter.

In some examples the circuit further comprises a resistive load, and the controller is further configured to, in the balancing mode, configure the resistive load to be the electrical component, such that the circuit provides the output electrical power to the resistive load. In some scenarios, the output power required to keep the inverter(s) ON may be more than what can be safely dumped into electrical components internal or external to the DC-AC inverter circuit. Therefore a resistor is an effective way of dumping the excess output power to keep the inverter(s) ON.

In some examples the circuit further comprises two or more inverters for converting the input electrical power to the output electrical power, and the controller is further configured to, in the balancing mode, configure a first inverter to provide the output electrical power; and configure a second inverter to be the electrical component, such that the first inverter provides the output electrical power to the second inverter. Because some DC-AC inverter circuits may comprise more than one inverter, this can be utilised to advantageously transfer power between the inverters and thus keep the inverters ON to provide the active balancing.

In some examples, the controller is further configured to, in the balancing mode, alternate between configuring the first inverter to provide the output electrical power and the second inverter to be the electrical component, and configuring the second inverter to provide the output electrical power and the first inverter to be the electrical component

In some examples the circuit further comprises a multiplexer, and the controller is further configured to connect or disconnect the inverter or inverters to the main electrical load through the multiplexer.

In some examples the circuit further comprises a multiplexer. A multiplexer is an effective way of connecting components within an electrical network or circuit.

In some examples the circuit further comprises a plurality of main electrical loads, a plurality of inverters, and a multiplexer which connects the inverters to the main electrical loads. The controller configures the multiplexer such that: an equal number of inverters are connected to an equal number of electrical loads; or a greater number of inverters are connected to a fewer number of electrical loads; or a fewer number of inverters are connected to a greater number of electrical loads.

In a second aspect there is provided a DC-AC inverter circuit for providing electrical power to a main electrical load, the circuit comprising two terminals for receiving a DC-link voltage; two or more capacitors connected in series between the two terminals, wherein each capacitor has a capacitor voltage; one or more inverters which receive the DC-link voltage and the capacitor voltages, and convert an input electrical power to provide an output electrical power to operate a main electrical load; and the controller of the first aspect.

In some examples the circuit further comprises an output filter configured to filter the output electrical power for the main electrical load; and/or two or more inverters; and/or a resistive load; and/or a multiplexor.

In a third aspect there is provided an aircraft electrical network comprising the DC-AC inverter circuit of the second aspect; a main electrical load or a plurality of main electrical loads; and a power source for supplying the DC-link voltage.

In some examples the main electrical load comprises a motor for an auxiliary system. The auxiliary system is not used for aircraft propulsion.

In some examples the auxiliary system is a landing gear assembly; or a toilet flush system; or a wing slat assembly; or a de-icing system.

In a fourth aspect there is provided a method for controlling a DC-AC inverter circuit, the circuit comprising two terminals for receiving a DC-link voltage, two or more capacitors connected in series between the two terminals, wherein each capacitor has a capacitor voltage, the circuit configured to convert an input electrical power to an output electrical power for operating a main electrical load. The method comprises configuring the circuit into a balancing mode in response to the main electrical load becoming non-operational. The balancing mode comprises configuring the circuit to output electrical power to an electrical component, such that the DC-AC inverter circuit remains operational to balance the capacitor voltages while the main electrical load remains non-operational.

In a fifth aspect there is provided a controller for a DC-AC inverter circuit. The circuit comprises two terminals for receiving a DC-link voltage. The circuit uses the DC-link voltage to produce at least one internal voltage level, wherein the internal voltage level is between the DC-link voltage. The circuit is configured to convert an input electrical power to an output electrical power for operating a main electrical load. The controller is configured to, in response to the main electrical load becoming non-operational, configure the circuit into a balancing mode. In the balancing mode the controller configures the circuit to output electrical power to an electrical component, such that the DC-AC inverter circuit remains operational to balance the internal voltage level while the main electrical load remains non-operational.

In a sixth aspect there is provided a DC-AC inverter circuit. The circuit comprises two terminals for receiving a DC-link voltage. The circuit uses the DC-link voltage to produce at least one internal voltage level, wherein the internal voltage level is between the DC-link voltage. The circuit comprises one or more inverters which receive the DC-link voltage and the internal voltage level, and convert an input electrical power to provide an output electrical power to operate a main electrical load. The circuit comprises the controller of the fifth aspect.

The controller of the fifth aspect, the circuit of the second and sixth aspects and the aircraft of the third aspect may each comprise any of the features of the examples described with respect to the first aspect. The method of the fourth aspect may include any functional steps described in relation to the examples of the first to third aspects.

### BRIEF DESCRIPTION OF THE DRAWINGS

Various examples will now be described with reference to the accompanying drawings in which:
Figure 1 shows a controller, an aircraft electrical network, a DC-AC inverter circuit, a power source and an electrical load.
Figure 2 shows the features of Figure 1 with an additional load, two inverter channels and a multiplexer.

### DETAILED DESCRIPTION

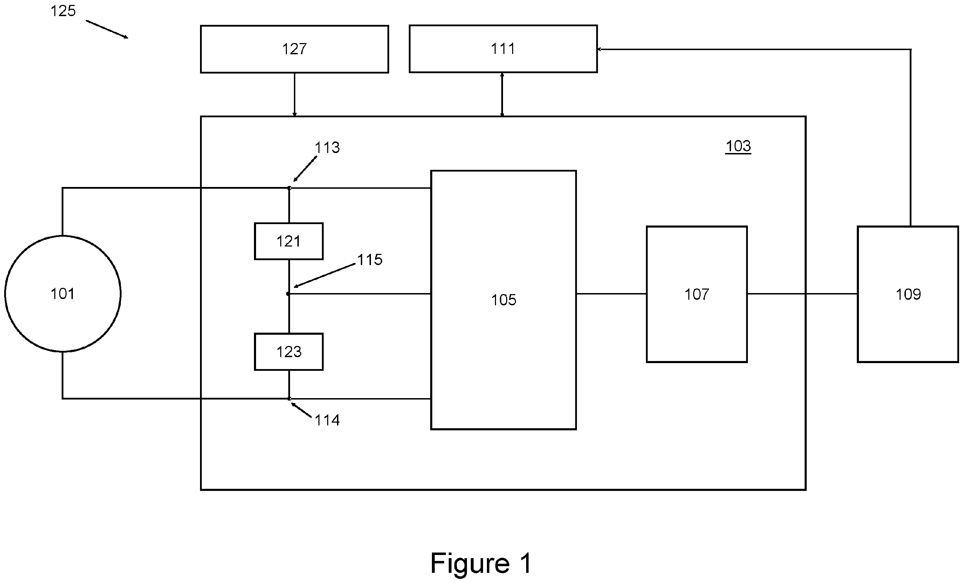

With reference to Fig. 1, an aircraft electrical network 125 comprises a power source 101, a DC-AC inverter circuit 103 (herein abbreviated to "circuit 103"), a main electrical load 109, a power controller 127 and a supervisory controller 111.

The circuit 103 comprises a first terminal 113 and a second terminal 114.

The power source 101 is a direct current (DC) power source and is configured to supply electrical power to the circuit 103 by applying a DC-link voltage across the terminals 113, 114 for powering the main electrical load 109. The power source 101 may be any part of the aircraft electrical network 125 which is suitable for providing electrical power via a DC-link voltage between two terminals. The DC-link voltage at the terminals 113, 114 is, in ideal conditions, fixed, thereby providing a continuous DC voltage output. For example, the first terminal 113 may be at 100V and the second terminal 114 may be at 0V.

The circuit 103 comprises two or more capacitors 121, 123 connected in series between the terminals 113, 114. Each of the capacitors 121, 123 have a voltage drop which can be determined based on the voltage at the first terminal 113 or second terminal 114 relative to a connection point 115 defined between the capacitors 121, 123. Thus, the DC-link voltage is provided by the power source 101, whereas the voltage at the connection 115 is produced internally by the circuit 103. The circuit 103 may comprise additional circuitry (for example resistors, transistors, diodes etc.) in order to facilitate the connection to the DC-link voltage, or in order to produce the connection 115.

In this example two capacitors 121, 123 are shown, however it is to be understood that more than two capacitors may be used, which as a result will define more than one internal connection 115.

The circuit 103 comprises an inverter 105. The inverter 105 is a three phase DC-AC power inverter built from solid state components. The inverter 105 may alternatively be a single phase inverter. The inverter 105 may utilise any inverter topology, including outputting the electrical power in the form of a sine wave, square wave or near sine wave PWM; and including mechanical as well as solid state components.

The inverter 105 is connected to the two terminals 113, 114 which provide the DC-link voltage, and is also connected to the connection 115. The inverter 105 receives operational control signals by the power controller 127. The power controller 127 may be a part of the circuit 103 or the aircraft electrical network 125. The power controller 127 and the controller 111 may be the same or different controllers. The operational control signals include instructions to the inverter 105 to convert the DC electrical power, as suppled by the power source 101, to alternating current (AC) electrical power. In the conversion process, the inverter 105 implements algorithms that balance the capacitor voltages, as discussed in more detail below.

The inverter 105 may be connected to a filter 107 for filtering the output electrical power, or may be connected directly to the main electrical load 109. The filter may be, for example, an RLC or sinewave filter to cope with transmission line effects, help with EMC, or drive legacy motors with insulation rated for 400Hz.

The primary objective of the power source 101 is to supply energy for the main electrical load 109 to consume. The main electrical load 109 may be a single component, or may be comprised of a plurality of components. The main electrical load 109 may be, for example, a three phase AC motor used to mechanically open or close a hatch for an aircraft's landing gear. Alternatively, the main electrical load 109 may be, for example, a plurality of motors or pumps used in an aircraft's sanitisation system.

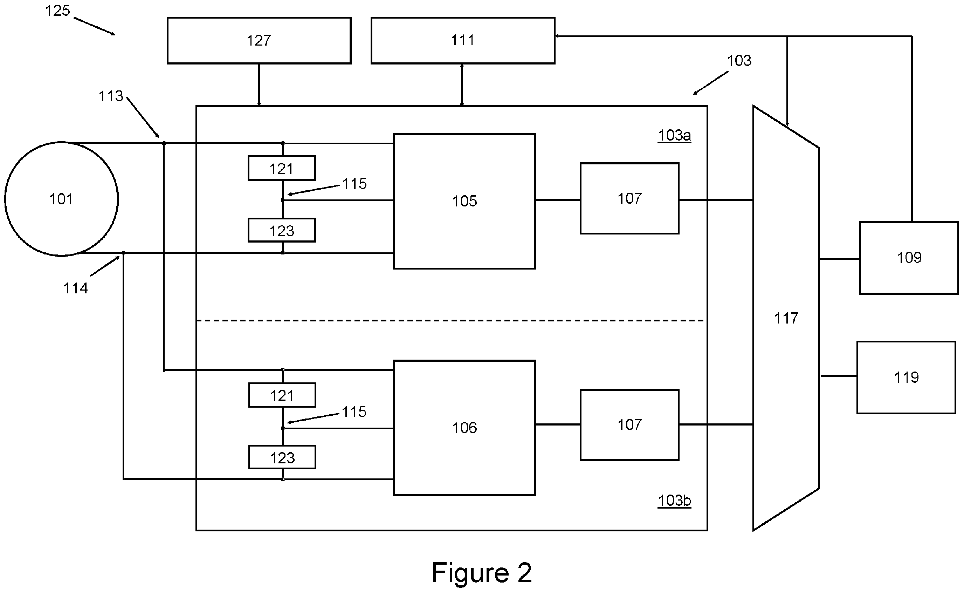

It is to be understood that a variety of main electrical loads 109 may be used and the specific nature of the main electrical load 109, and whether it is one load or a plurality of loads is not limiting. Where the main electrical load 109 comprises a plurality of electrical components, a multiplexer 117, as described below in relation to Fig. 2, may be used to control connectivity between the circuit 103 and the main electrical loads 109. If the main electrical load 109 comprises a plurality of loads each of which have the same requirements, and are to be powered by one inverter 105, then a multiplexer may not be required.

The controller 111 is connected to the circuit 103 to provide control signals to the inverter 105 and configure the output electrical power in certain conditions. The controller 111 is also connected to the main electrical load 109 to monitor the status of the main electrical load. The control signals provided by the controller 111 are for when the main electrical load 109 becomes non-operational, as described in more detail below.

As shown in Fig. 2, the aircraft network 125, in addition to the features described in relation to Fig. 1, may further comprise a multiplexer 117 and a resistive load 119, and the circuit 103 may further comprise an additional inverter 106. The controller 111 is also connected to the multiplexer 117 for additional control over the output electrical power.

The additional inverter 106 comprises capacitors 121, 123 and a filter 107. The inverter 106 operates and can be configured in the same manner as the inverter 105 described in relation to Fig. 1. However, it is to be understood that the inverter 106 may be of a different size or specification compared to the inverter 105. Accordingly, the capacitors 121, 123, connection 115 and filter 107, and operational control signals provided by the power controller 127, and control signals provided by the supervisory controller 111, may be different for the inverter 106 compared to the inverter 105, and should be provided in accordance with the specification of the inverter 106.

The inverter 105 and its associated circuitry and components form a first inverter channel 103a to output AC electrical power. Similarly, the additional inverter 106 and its associated circuitry and components form a second inverter channel 103b to output AC electrical power. The circuit 103 thus comprises the first and second inverter channels 103a, 103b, and the total output power from the circuit 103 is the sum of each of the inverter channels 103a, 103b. As discussed above, each inverter channel 103a, 103b may have the same or different specification. It is to be understood that the specification of the inverter channels 103a, 103b is not limiting to the invention.

Although two inverter channels 103a, 103b are shown, it is to be understood that any number of inverter channels could be used, including a dynamic number of channels which may be switched in or out of the circuit 103, based on the requirements of the main electrical load 109.

The multiplexer 117 connects the output of the circuit 103 to the main electrical load 109 and the resistive load 119, such that the output electrical power from each inverter channel 103a, 103b can be transferred to the main electrical load 109 and/or the resistive load 119. Although the multiplexer 117 is shown as external to the circuit 103, the multiplexer 117 may instead be a part of the circuit 103.

Although one multiplexer 117 is shown, it is to be understood that any number of multiplexers may be utilised in order to dynamically reconfigure the network 125 or circuit 103. In this manner, the multiplexer(s) allow the electrical network 125 or circuit 103 to be readily re-configured in a modular manner in order to produce a desired configuration. For example, the multiplexers may be configured such that a plurality of inverter channels 103a ,103b output filtered, electrical power to one main electrical load 109; or a single inverter channel 103a outputs electrical power to one or more main electrical loads 109. The multiplexers may also be connected between components internal or external of the circuit 103. For example, the filter 107 may be enabled or disabled.

The configuration of the circuit 103, including the multiplexer(s) 117 and the filter(s) 107, are provided by the power controller 127, and are set in accordance with the needs of the main electrical load 109.

The resistive load 119 is a load connected to the aircraft electrical network 125 for the purpose of consuming energy in a controlled manner. The resistive load 119 may convert electrical power into heat / thermal energy. The resistive load 119 may therefore be any component capable of receiving electrical power and generating heat energy. The resistive load may include, for example, a high power resistor, or a heating element thermally coupled to a heatsink or any part of the aircraft that is suitable for dissipating heat energy. In this manner, the resistive load 119 is not a main electrical load 109, because it is not a primary objective of the power source 101 to the resistive load 119. On the contrary, it is the objective of the resistive load 119 to dissipate excess energy in the aircraft electrical network 125, in a safe and controlled manner. The resistive load 119 may be, for example, a braking resistor.

Referring to Fig. 1 and Fig. 2, in a first operating condition, the power source 101 supplies DC electrical power by applying a DC-link voltage across the terminals 113, 114. The capacitors 121, 123 form the connection 115. The DC-link voltage 113, 114 and the connection 115 is connected to the inverter 105.

In the first operating condition, the power controller 127 provides the operational control signals to the circuit 103 for the inverter 105 to be ON, because it is desired to operate the main electrical load 109.

The term "operate" means that the main electrical load 109 is drawing electrical power and consuming energy in accordance with the requirements of the main electrical load 109 for any form of normal operation in order to output a useful work product (for example, a motor in a normal torque producing mode, a high torque producing mode, a low torque producing mode etc.). It is understood that "operate" does not include a standby or idle condition, whereby the there is no useful work product output by the main electrical load 109.

In ideal conditions, the capacitor voltages are fixed and consistent. However, in practice, the capacitor voltages may fluctuate, vary or drift as a result of, for example, leakage currents, voltage measurements, part to part variation etc.

However, in the first operating condition, the inverter 105 is ON and thus the inverter 105 actively converts the DC electrical power from the power source 101 and outputs 3-phase AC electrical power. When the inverter 105 converts the DC electrical power to AC electrical power, the conversion processes balances the capacitor voltages.

Balancing the capacitor voltages may be achieved because the conversion process implements algorithms which balance the capacitor voltages.

As a result, in the first operating condition, because the inverter 105 is ON and the main electrical load is operational, the capacitor voltages are actively balanced by the inverter 105.

For example, the inverter 105 may have a T-type inverter topology which results in the capacitor voltages balancing as upper and lower switching patterns are mirrored in nature. A voltage sensor may be implemented on each of the two terminals 113, 114 and the connection 115 to monitor the voltage at all times. The voltage information can then be fed through the power controller 127 and the power controller 127 can adjust the operation of switches within the inverter 105 so the capacitor voltages are balanced.

Furthermore, because the inverter 105 receives electrical power at three voltage levels, the inverter 105 is able to output electrical power with improved efficiency, power quality and EMC signature. This may be known as multilevel power conversion.

The AC electrical power output from the inverter 105 is transferred to the filter 107. The filter 107 further improves the quality of the AC electrical power, in accordance with the needs of the main electrical load 109. The AC electrical power is then transferred to the main electrical load 109 in order to operate the main electrical load 109. Thus, the circuit 103 provides the output electrical power for the main electrical load 109 to operate normally.

During the first operating condition, the controller 111 observes that the main electrical load 109 is operational, and therefore does not output any additional control signals to the circuit 103.

In the first operating condition, the main electrical load 109 may be, for example, a motor which moves a hatch for an aircraft landing gear system to an open or closed position. In a second operating condition, it may be desired for the main electrical load to become non-operational. For example, once the hatch has reached the respective open or closed position, it will be desired for the motor to stop providing any force and to become non-operational.

The term "non-operational" may mean that the main electrical load 109 is not drawing electrical power or consuming energy. The main electrical load 109 may be non-operational when the main electrical load 109 is turned off, in a standby state which does not produce a useful work output, in an idle state which does not produce a useful work output, or is disconnected, for any reason, from the aircraft electrical network 125.

It will be understood therefore that the main electrical load 109 may become non-operational for various reasons, for example as a result of a piloting command received from an aircraft control system which instructs the main electrical load 109 to turn off, or as a result of a fault which causes the main electrical load 109 to shut down or disconnect etc. In any scenario, non-operational means that the main electrical load 109 is not producing a useful work output.

In the second operating condition, the controller 127 changes the operational control signals to the circuit 103 to make the main electrical load 109 non-operational, which includes to turn the inverter 105 OFF. If the inverter 105 were to turn OFF, the active balancing of the capacitor voltages provided by the inverter 105 would also stop, and the capacitor voltages would become susceptible to voltage unbalancing.

The controller 111 detects that the main electrical load 109 has become non-operational, or that a signal has been provided by the power controller 127 to make the main electrical load 109 non-operational, and as a result the controller 111 configures the circuit 103 into a balancing mode.

In the balancing mode the controller 111 configures the circuit 103 to output electrical power to an electrical component, such that the circuit 103 remains operational and the main electrical load 109 remains non-operational.

The circuit 103 remains operational as a result of the inverter 105 remaining ON and converting the DC electrical power to output AC electrical power. In this process, as discussed above, the inverter 105 implements algorithms which balance the capacitor voltages. Thus, by causing the circuit 103 to remain operational, despite the main electrical load 109 becoming non-operational, the capacitor voltages remains balanced and susceptibility to unbalancing is reduced or eliminated. The advantages of the invention can thus be realised.

The electrical component can be any component capable of receiving electrical power from the circuit 103, without causing the main electrical load 109 to operate. In a first example, the main electrical load 109 comprises a Field Orientated Controller for a motor. In this example, the main electrical load 109 is the electrical component, and the circuit provides the AC output electrical power such that when the Field Orientated Controller receives the AC output electrical power, a current builds up in the Field Orientated Controller. This is because the current which builds up in the Field Orientated Controller, which can be defined by orthogonal components, for example flux and torque, is configured to have an orientation that prevents the motor from producing torque. As a result, the current that builds up on the Field Orientated Controller is sufficient to cause the inverter 105 to remain ON, but does not cause mechanical operation of the motor. As a result voltage balancing of the capacitor voltages remains active.

In a second example, the circuit 103 is configured such that the filter 107 is the electrical component and the circuit 103 provides the output electrical power to the filter 107. This is achieved by configuring the inverter 105 to demand high frequency switching from the filter 107. This may be when the main electrical load 109 is disconnected and is therefore non-operational. The filter 107 is seen by the inverter 105 as a high impedance component at low or at fundamental frequencies. Demanding high frequency switching forces the inverter 105 to provide a small current flow through the filter 107. In this manner, the inverter 105 remains ON, as a small amount of power is directed to the filter 107, and voltage balancing of the capacitor voltages remains active.

It is not required that the electrical load 109 be disconnected. However, disconnecting the load 109 would improve efficiency as it would reduce losses which may develop in the load 109 during the (non-functional) high frequency inverter switching.

In a third example, the circuit 103 is configured such that the resistive load 119 is the electrical component and the circuit 103 provides the output electrical power to the resistive load 119. The resistive load 119 can be a low power load that can be connected to the inverters 105, 106 as an output through the multiplexer 117, and host current loads. As a result, the inverters 105, 106 remain ON and voltage balancing of the capacitor voltages remains active.

In a fourth example, the circuit 103 is configured such that the first inverter 105 provides the output electrical power, and the second inverter 106 is the electrical component, such that the first inverter 105 provides the output electrical power to the second inverter 106. In this way the first inverter 105 acts as a current source and the second inverter 106 acts as a current sink. The current path from the first inverter 105 to the second inverter 106 requires both inverters 105, 106 to be switching for short durations. The switching patterns can be controlled to be symmetrical relative to the connection 115, resulting in the capacitor voltages converging to a balanced state. As a result, the inverters 105, 106 remain ON and voltage balancing of the capacitor voltages remains active.

As discussed above, unbalanced capacitor voltages can lead to derating violations of capacitors and power electronics devices. This has been conventionally resolved by providing overrated power electronics switches which are capable of handling the (unbalanced) higher than nominal voltages. However, even with the addition of overrated power electronics, in aerospace applications, higher than nominal voltages make the power electronics switches more susceptible to a single event burnout driven by cosmic radiation.

Because the inverter remains ON even when the main load is non-operational, the capacitor voltages remain balanced, and susceptibility to unbalancing is advantageously reduced or eliminated completely.

Because unbalancing is reduced or eliminated completely, the components within the DC-AC inverter circuit can be downsized compared to a conventional system (wherein components are usually overrated to protect against the unbalancing), resulting in lower manufacture costs, as well as smaller device footprints and an overall weight reduction.

Additionally, because in some examples the inverter channels are not required to be connected in to each other (due to balancing being possible without such connection), the possibility of a fault in one channel propagating to another channel is reduced.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A controller for a DC-AC inverter circuit, the circuit comprising two terminals for receiving a DC-link voltage, and two or more capacitors connected in series between the two terminals, wherein each capacitor has a capacitor voltage, the circuit configured to convert an input electrical power to an output electrical power for operating a main electrical load; the controller configured to:
in response to the main electrical load becoming non-operational, configure the circuit into a balancing mode;
wherein in the balancing mode the controller configures the circuit to output electrical power to an electrical component, such that the DC-AC inverter circuit remains operational to balance the capacitor voltages while the main electrical load remains non-operational.

2. The controller of claim 1, wherein the main electrical load comprises a Field Orientated Controller for a motor, the controller further configured to, in the balancing mode:
configure the main electrical load to be the electrical component; and
configure the circuit to provide the output electrical power such that when the Field Orientated Controller receives the output electrical power, a current builds up in the Field Orientated Controller.

3. The controller of claim 2, wherein the current which builds up in the Field Orientated Controller is defined by orthogonal components which are configured to have an orientation that prevents the motor from producing torque.

4. The controller of claim 1, wherein the circuit further comprises an output filter configured to filter the output electrical power for the main electrical load, the controller further configured to, in the balancing mode:
configure an inverter to demand high frequency switching; and
configure the filter to be the electrical component, such that the circuit provides the output electrical power to the filter.

5. The controller of claim 4, wherein the high frequency switching is at a frequency greater than 1 kHz.

6. The controller of claim 1, wherein the circuit further comprises a resistive load, the controller further configured to, in the balancing mode:
configure the resistive load to be the electrical component, such that the circuit provides the output electrical power to the resistive load.

7. The controller of claim 1, wherein the circuit further comprises two or more inverters for converting the input electrical power to the output electrical power, the controller further configured to, in the balancing mode:
configure a first inverter to provide the output electrical power; and
configure a second inverter to be the electrical component, such that the first inverter provides the output electrical power to the second inverter.

8. The controller of any preceding claim, wherein the circuit further comprises a multiplexer, the controller further configured to:
connect or disconnect the inverter or inverters to the main electrical load through the multiplexer.

9. The controller of any preceding claim, wherein the circuit further comprises a plurality of main electrical loads, a plurality of inverters, and a multiplexer which connects the inverters to the main electrical loads, wherein:
the controller configures the multiplexer such that:
an equal number of inverters are connected to an equal number of electrical loads; or
a greater number of inverters are connected to a fewer number of electrical loads; or
a fewer number of inverters are connected to a greater number of electrical loads.

10. A DC-AC inverter circuit for providing electrical power to a main electrical load, the circuit comprising:
two terminals for receiving a DC-link voltage;
two or more capacitors connected in series between the two terminals, wherein each capacitor has a capacitor voltage;
one or more inverters which receive the DC-link voltage and the capacitor voltages, and convert an input electrical power to provide an output electrical power to operate a main electrical load; and
the controller of any preceding claim.

11. The circuit of claim 10, further comprising an output filter configured to filter the output electrical power for the main electrical load.

12. The circuit of claim 10 or 11, further comprising two or more inverters; and/or a resistive load; and/or a plurality of main electrical loads; and/or a multiplexor.

13. An aircraft electrical network comprising:
the controller of claims 1 to 9 or the DC-AC inverter circuit of claims 10 to 12;
a main electrical load or a plurality of main electrical loads; and
a power source for supplying the DC-link voltage.

14. The aircraft electrical network of claim 13, wherein the main electrical load comprises a motor for an auxiliary system within the aircraft.

15. A method for controlling a DC-AC inverter circuit, the circuit comprising two terminals for receiving a DC-link voltage, two or more capacitors connected in series between the two terminals, wherein each capacitor has a capacitor voltage, the circuit configured to convert an input electrical power to an output electrical power for operating a main electrical load; the method comprising:
configuring the circuit into a balancing mode in response to the main electrical load becoming non-operational;
wherein the balancing mode comprises:
configuring the circuit to output electrical power to an electrical component, such that the DC-AC inverter circuit remains operational to balance the capacitor voltages while the main electrical load remains non-operational.
